# EUROPEAN PATENT APPLICATION

(11) **EP 4 491 750 A2**
(43) Date of publication of application: **15.01.2025**
(21) Application number: 24183838.2
(22) Date of filing: 21.06.2024
(51) Int. Cl.: C22B 1/242, C22B 7/00, C22B 15/00

(54) **COPPER BRIQUETTE AND METHOD FOR ITS PRODUCING**

(30) Priority: 12.07.2023 PL 44555923
(71) Applicant: KGHM Polska Miedz Spólka Akcyjna, 59-301 Lubin (PL)
(72) Inventor: Madej, Piotr, Gliwice (PL); Cybulski, Andrzej, Gliwice (PL); Kulawik, Sebastian, Zakrzow (PL); Krawiec, Grzegorz, Zabrze (PL); Kortyka, Lukasz, Tychy (PL); Sak, Tomasz, Gliwice (PL)
(74) Representative: AOMB Polska Sp. z.o.o.

(57) **Abstract**

The subject of the invention is a copper briquette containing copper concentrate, binder and recycling materials, characterized by the fact that it additionally contains printed circuit board (PCB) scrap in an amount of 2-30% by weight. The subject of the invention is also a method for producing copper briquettes according to the invention.

## Description

### Technical field

The subject of the invention is copper briquettes and a method for producing them. The method is used in the management of printed circuit board (PCB) scrap and the production of copper briquettes.

### State of the art

Sulfide copper concentrates obtained by flotation for smelting technology in a shaft furnace (blast furnace) must be thickened by briquetting. Nowadays, the shaft furnace (blast furnace) has lost its importance for primary copper production and is only used in a few places, for example at the Legnica smelter (Ullmann's Encyclopedia of Industrial Chemistry, ed. James E. Bailey, Wiley-VCH Verlag GmbH, 2001). Therefore, the method of briquetting concentrates obtained by flotation is particularly developed in Poland.

Briquetting of sulphide metal ore flotation concentrates is carried out using inorganic binders, including: quicklime, dolomite, magnesium oxide, cement, water glass, etc. or with organic binders such as coal tar, asphalt, waste sulphite lye or viscose. Many briquetting methods are also known, e.g. those disclosed in: PL62278, PL127131, PL221928, or PL61705. Of particular note is the method disclosed in PL221928, used in, among others, at KGHM Copper Smelter Legnica, implemented in the following stages:
a) averaging (mixing) concentrates,
b) mixing with other recycling materials
c) averaged and mixed material with a moisture content of approx. 8 - 10% by mass. combines with post-sulfite lye
d) the obtained mixture with high humidity of approx. 14 -15% by mass. water is subjected to drying and final mixing in a rotary dryer to a moisture content of the mixture of 3.5 to 4.5% by mass.
e) After drying, the mixture is sent to a roller press to form briquettes
f) Screening briquettes to separate the fine fraction

### Purpose of the invention

The state of the art described above has many unsolved technical problems. There is a need to manage scrap printed circuit boards, the so-called PCB scrap. However, there are no known methods of briquetting sulphide concentrates with the addition of printed circuit board scrap. This requires a change in the technology of preparing materials for the briquetting process. Additionally, printed circuit board scrap is a plastic material which, after mixing with copper concentrate and forming briquettes in a roller press, relaxes and deforms, causing the disintegration of the produced briquettes.

The purpose of this invention is to overcome the technical problems of the current state of technology, in particular the management of printed circuit board scrap, the so-called PCB scrap in copper briquettes and obtaining copper PCB briquettes with satisfactory properties (e.g. no problem of disintegration).

### The subject matter of the invention

The subject of the invention is a copper briquette containing concentrate
copper, binder and recycling materials, characterized by the fact that it additionally contains printed circuit board (PCB) scrap in the amount of 2-30% by weight.

Preferably, the copper briquette according to the invention is characterized in that the content of shredded printed circuit board (PCB) scrap is 10% by mass.

Preferably, the copper briquette according to the invention is characterized by the fact that the content of mass recycled materials does not exceed 30% by mass.

Preferably, the copper briquette according to the invention is characterized by the fact that as recycling materials it contains screenings of briquettes, screenings of converter slag with a granulation of less than 5 mm and coarse shaft dust.

More preferably, the copper briquette according to the invention is characterized in that the content of briquette screenings is up to 25% of the mixture, converter slag screenings with a granulation of less than 5 mm is 3% and coarse shaft dust is 3%.

Preferably, the copper briquette according to the invention is characterized by a binder content of 12 to 14% by mass.

Preferably, the copper briquette according to the invention is characterized by a moisture content of 4.5-5.5% by mass.

The invention also provides a method for producing copper briquettes according to the invention, including steps:
a. averaging (mixing) copper concentrates
b. mixing the copper concentrates with the recycling materials in a mixer until a substantially homogeneous mixture is obtained,
c. the binder in the form of post-sulfite lye is dosed into the mixed mixture in the mixer,
d. the mixture is dried and mixed in a dryer,
e. briquettes are formed from the mixture,
f. fine fractions are separated from briquettes.
characterized by the addition of shredded printed circuit board (PCB) scrap from 2% to 30% by weight to the copper concentrates mixed with recycled materials. in relation to the total weight of wet briquettes.

Preferably, the method according to the invention is characterized in that shredded printed circuit board (PCB) scrap is added in an amount of 10% by mass. in relation to the total weight of wet briquettes.

Preferably, the method according to the invention is characterized in that before adding shredded printed circuit board (PCB) scrap, the scrap of the circuit boards is shredded to a size of 1 to 28 mm.

More preferably, the method according to the invention is characterized in that the scrap of the peripheral tiles is shredded to a size of 1 to 20 mm.

Preferably, the method according to the invention is characterized by the addition of briquette screenings, converter slag screenings with a granulation of less than 5 mm and coarse shaft dusts as recycling materials.

More preferably, the method according to the invention is characterized by the fact that briquette screenings are added in an amount of up to 25%, converter slag screenings with a granulation of less than 5 mm are added in an amount of 3%, and coarse shaft dusts are added in an amount of 3%.

Preferably, the method according to the invention is characterized in that the binder in the form of post-sulfite lye is dosed in an amount of 12 to 14% by mass.

Preferably, the method according to the invention is characterized in that drying and mixing are carried out until a moisture content of 4.5 - 5.5% by mass is obtained.

### Advantages of the invention

By using scrap printed circuit boards in the glass process as a component of copper briquettes, it is possible to obtain briquettes with good physical and mechanical properties with lower consumption of primary raw materials. Thanks to this, the production of briquettes is cheaper and more efficient. Moreover, it is possible to use waste materials effectively.

### A brief description of the drawing figures

The subject of the invention in an embodiment is illustrated, in a way that does not limit the scope of the invention, in the attached drawing, in which:

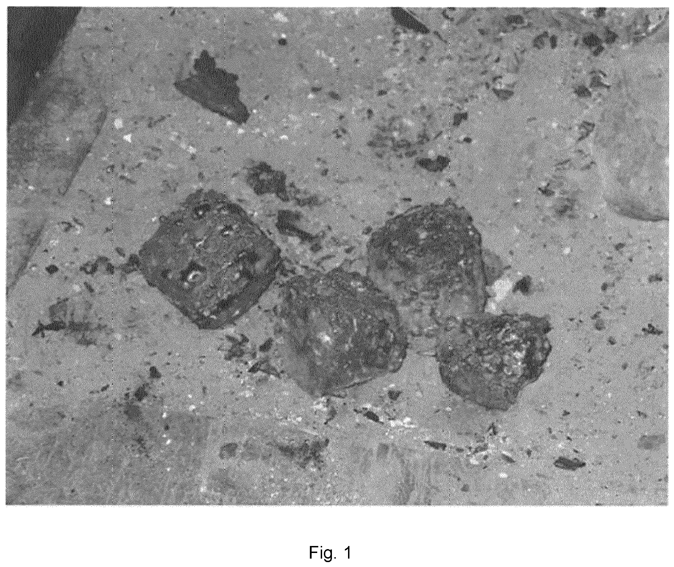

Fig. 1. Briquettes with the addition of 10% PCB scrap produced in a forging furnace in 5 minutes. at a temperature of approximately 1080°C.

### Example 1 - basic mixture of copper briquettes

In a preferred embodiment, first of all, a base mixture for briquetting was prepared, including the "Lubin" sulphide concentrate, converter slag screenings, coarse shaft dusts and briquette screenings, according to the state-of-the-art method (e.g. PL61705) used at the KGHM Copper Smelter Legnica, in the following proportions:

| **Ingredients of the basic mixture** | **Ingredient content [%]** |
|---|---|
| Concentrate Lubin | 71,1 |
| Screening of converter slag 0-5mm | 2,9 |
| Coarse shaft dusts from cyclones | 3,0 |
| Briquette screenings | 23,0 |
| **Average** | **100,0** |

The basic mixture of copper briquettes, from the ingredients presented in the table above, was obtained by the following operations:
A. averaging (mixing) concentrates,
B. mixing with recycling materials

In another preferred embodiment, the recycling materials are briquette screenings (up to 25% of the briquetted mixture), converter slag screenings with a granulation of less than 5 mm (usually approx. 3% of the briquetted mixture), coarse shaft dusts (usually approx. 3% of the briquetted mixture). The moisture content of this particular copper briquette base mix according to the preferred embodiment was 6.04 wt.%, but the moisture content of the copper briquette base mix (in other embodiments) may vary from 8 to 10 wt.%.

### Example 2 - preparation of copper briquettes

The process of managing printed circuit board scrap in the shaft process includes the production of copper briquettes according to the preferred embodiment of the invention from copper concentrates and other recycled materials with the addition of PCB scrap from 2% to 30% by weight. with a fraction size below 1 to 28 mm in relation to the total weight of the wet briquettes. In another preferred embodiment, the printed circuit board scrap has a size of 1 to 20 mm. In yet another embodiment, the amount of PCB scrap is 10 wt%.

In a preferred embodiment, the PCB scrap was shredded using a crusher from 1 to 28 mm. In another preferred embodiment, printed circuit board scrap is shredded to a size of 1 to 20 mm. To the base mixture of copper briquettes obtained in example 1 with a moisture content of 6.04%, the fraction of PCB scrap <5 mm was added in an amount of 10% to the mass of the wet base mixture. The PCB scrap content can be (in other embodiments) from 2% to 30%, without prejudice to the copper briquettes according to the invention. These materials were transferred to a twin-shaft mixer (other types of mixers may be used) and mixed until a substantially homogeneous mixture was obtained. Post-sulfite lye was added in the mixer as a binder in an amount of 12% by weight. in relation to the weight of the wet base mixture. The amount of binder may vary (in other embodiments) in the range of 12-14% by weight. depending on the expected properties of the copper briquette according to the invention. In a preferred embodiment, the Post-sulfite lye is dosed in the form of liquid Post-sulfite lye with a solids content of approximately 50% by mass. The materials prepared and mixed in this way were sent to the dryer to the desired humidity level of 2÷10%. Drying can be carried out, for example, in a drum (rotary) dryer heated by exhaust gases or diaphragm steam. In other preferred embodiments, the moisture content is 4.5-5.5%. In this embodiment, drying was performed in a drum dryer and dried to a moisture content of 5.26%. Then the mixture was briquetted using a briquetting (roller) press. Briquettes according to the invention were sieved on a grate to separate the fine fraction.

### Example 3 - laboratory tests

In a preferred embodiment, the obtained copper briquettes according to the invention were tested at the KGHM Legnica Copper Smelter. High-temperature laboratory strength tests and a forging test showed that the copper briquettes according to the invention have good mechanical strength at high temperatures of 1000÷1100°C and are durable, and the gases released from the combustion of plastics during their heating do not cause disintegration. The copper briquettes according to the invention had a drop strength of 90% and their compressive strength was on average 0.39 kN/cm². The final moisture value of the mixture of copper briquettes according to the invention subjected to the briquetting process was 4.5-5.5%. Copper briquettes according to the invention met the requirements allowing them to be smelted in shaft furnaces (e.g. in the KGHM Legnica Copper Smelter).

## Claims

1. A Copper briquette containing copper concentrate, binder and recycling materials, **characterized in that** it additionally contains printed circuit board (PCB) scrap in an amount of 2-30% by weight.

2. The copper briquette according to claim 1, **characterized in that** the content of shredded printed circuit board (PCB) scrap is 10% by mass.

3. The copper briquette according to any one of claims. 1 - 2, **characterized in that** the content of bulk recycling materials does not exceed 30% by mass.

4. The copper briquette according to any of the claims. 1 - 3, **characterized in that** as recycling materials it contains screenings of briquettes, screenings of converter slag with a granulation of less than 5 mm and coarse shaft dust.

5. The copper briquette according to claim 4, **characterized in that** the content of briquette screenings is up to 25% of the mixture, converter slag screenings with a granulation of less than 5 mm is 3% and coarse shaft dust is 3%.

6. The copper briquette according to any of the claims. 1 - 5, **characterized in that** the binder content is 12 to 14% by mass.

7. The copper briquette according to any of the claims. 1-6, **characterized in that** its moisture content is 2÷10% by mass.

8. A method for producing copper briquettes described in any of the claims 1 - 7, including steps:
a. averaging (mixing) copper concentrates
b. mixing the copper concentrates with the recycling materials in a mixer until a substantially homogeneous mixture is obtained,
c. the binder in the form of post-sulfite lye is dosed into the mixed mixture in the mixer,
d. the mixture is dried and mixed in a dryer,
e. briquettes are formed from the mixture,
f. fine fractions are separated from briquettes
**characterized in that**
shredded printed circuit board (PCB) scrap is added to the copper concentrates mixed with recycled materials, from 2% to 30% by weight. in relation to the total weight of wet briquettes.

9. The method according to claim 1. 8, **characterized in that** the shredded printed circuit board (PCB) scrap is added in an amount of 10 wt%. in relation to the total weight of wet briquettes.

10. The method according to any one of claims. 8-9, **characterized in that** before adding the shredded printed circuit board (PCB) scrap, the circuit board scrap is shredded to a size ranging from 1 to 28 mm.

11. The method according to claim 10, **characterized in that** the scrap of peripheral plates is crushed to a size of 1 to 20 mm.

12. The method according to any of claims 8 - 11, **characterized in that** briquette screenings, converter slag screenings with a granulation of less than 5 mm and coarse shaft dust are added as recycling materials.

13. The method of claim 12, **characterized in that** briquette screenings are added in an amount of up to 25%, converter slag screenings with a granulation of less than 5 mm are added in an amount of 3%, and coarse shaft dusts are added in an amount of 3%.

14. The method according to any of claims 8 - 13, **characterized in that** the binder in the form of post-sulfite lye is dosed in an amount of 12 to 14% by mass.

15. The method according to any of claims 8 - 14, **characterized in that** drying and mixing are carried out to obtain a moisture content of 2÷10% by mass.
